# EUROPEAN PATENT APPLICATION

(11) **EP 2 813 555 A2**
(43) Date of publication of application: **17.12.2014**
(21) Application number: 14172501.0
(22) Date of filing: 16.06.2014
(51) Int. Cl.: C09J 7/02, C09J 7/04

(54) **Thermal spray masking tape**

(30) Priority: 14.06.2013 US 201361835006 P
(71) Applicant: NITTO DENKO CORPORATION, Osaka 567 (JP)
(72) Inventor: Chen, Yu-chu (Valerie), Lakewood, NJ New Jersey 08701 (US); Suzuki, Masatoshi, Ibaraki-shi, Osaka 567-8680 (JP)
(74) Representative: Grünecker, Kinkeldey, Stockmair & Schwanhäusser

(57) **Abstract**

A double-side coated tape including a glass cloth carrier, a pressure sensitive adhesive layer on each side of the carrier, and a porous release liner. The pressure sensitive adhesive leaves no residue property on Stainless and Copper panel after 300°C x 15 minute with 5 minute cooling. A method of forming a double sided adhesive tape including: providing a porous carrier having a first surface and a second surface; applying a first pressure sensitive adhesive on the first surface of the porous carrier, curing the first pressure sensitive adhesive to form a first pressure sensitive adhesive layer, laminating a porous release liner on the first pressure sensitive adhesive layer, applying a second pressure sensitive adhesive on the second surface of the porous carrier; and curing the second pressure sensitive adhesive to form a second pressure sensitive adhesive layer.

## Description

### BACKGROUND OF THE INVENTION

### 1. Field of the Invention

The invention is related to a double sided adhesive tape. In particular, the invention is related to a double sided adhesive tape having high heat resistance and clean removability useful as a thermal spray masking tape.

### 2. Background

Thermal spraying (e.g., flame spray, plasma spray, wire arc spray, or high velocity oxy-fuel (HVOF) spray) is a commonly known process that uses a heat source (flame or other) and a coating precursor, which is melted (or heated) and sprayed (or propelled) onto the surface of a substrate to provide a thin coating. An advantage of thermal spraying is the ability to generate higher heat, thereby allowing melting of materials with high melting points, such as ceramics. In addition, thermal spraying can provide coatings over larger areas compared to other coating processes. Typically, metals, alloys, and ceramics are typically used to coat surfaces, such as steel or copper surfaces.

Thermal spray processes are ideal for applications including aircraft engine hardware, engine components, and metal rolling.

Generally, a thermal spray masking tape is used to prevent application of the coating material on certain areas of the substrate where a coating is undesired. Due to the high temperatures, e.g., 3000° F to 5000° F, associated with thermal spraying, the thermal spray masking tape should have excellent heat resistance, and should not lift off of the substrate being coated or fray during the process. In addition, since the thermal spray masking tape is removed after application of the coating, easy removal with no adhesive residue remaining on the substrate is desired.

Conventional thermal spray masking tapes are single coated tapes. Examples of conventional thermal spray masking tapes include a silicone adhesive coated on a glass cloth, a silicone rubber substrate, or a composite of silicone and a glass cloth. However, conventional single coated masking tapes may have problems of low adhesion when adhered to its backing for some applications that require overlapping of the masking tape. In addition, a convention single coated masking tape may have the problem that heavy residue remains on the substrate after a high temperature treatment.

Another conventional thermal spray masking tape includes a glass cloth carrier with one side coated with a silicone rubber and the other side coated with a silicone adhesive. Such conventional thermal spry masking tape may also have the problem of heavy residue remaining after a high temperature treatment.

A release liner is commonly used to facilitate handling of the conventional thermal masking tapes.

### BRIEF SUMMARY OF THE INVENTION

Examples of embodiments of the invention described below may overcome the above disadvantages and other advantages not described above. However, the invention is not required to overcome the disadvantages described above, and some embodiments of the invention may not overcome any of the problems described above.

According to an embodiment of the invention, there is provided a double sided adhesive tape having excellent high temperature heat resistance.

According to another embodiment of the invention, a double sided adhesive tape having excellent removal properties, i.e., leaves no adhesive residue when removed, is provided. In one aspect, the double sided tape leaves no residue property on a stainless steel panel or a copper panel after 300°C x 15 minute with 5 minute cooling.

According to another embodiment, there is provided a double sided tape including a porous carrier, a pressure sensitive adhesive layer on each side of the carrier, and a porous release liner.

According to other embodiments of the invention, the carrier is a porous carrier, such as a glass cloth. In another embodiment of the invention, the release liner has an air permeability from 5 sec/100 cc to 30000 sec/100 cc. In yet another embodiment of the invention, the release liner may be subjected to a release treatment, such as one where a long alkyl chain branched polymer is used. The air permeability of the release liner can be measured by a measurement method according to ISO 5636-5:2013.

According to another embodiment of the invention, the pressure sensitive adhesive layer includes a silicone adhesive. In one embodiment, the silicone adhesive may be a peroxide cured silicone adhesive. In yet another embodiment, the silicone adhesive may be a benzoyl peroxide cured silicone adhesive.

Other embodiments of the invention include methods of making the double sided adhesive tape. According to one embodiment of the invention, the pressure-sensitive adhesive layers are directly applied to the porous carrier without the generation of bubbles in the pressure-sensitive adhesive layers. In another embodiment of the invention, a porous carrier having a first surface and a second surface is provided, a first pressure-sensitive adhesive is applied on the first surface of the porous carrier and cured to form a first pressure-sensitive adhesive layer, then a porous release liner is laminated on the first pressure-sensitive adhesive layer, and a second pressure-sensitive adhesive is applied on the second surface of the porous carrier and cured to form a second pressure-sensitive adhesive layer.

### BRIEF DESCRIPTION OF THE DRAWINGS

The above and/or other embodiments, aspects, features and advantages of the invention will become more apparent by describing in detail examples of embodiments thereof with reference to the attached drawings.
Fig. 1 shows a cross-sectional view of an example of an embodiment of the double sided adhesive tape of the invention.
Figs. 2A and 2B show a representative coating process to make an embodiment of the double sided adhesive tape of the invention.
Fig. 3 shows the results after a high temperature treatment when an example of an embodiment of the double sided adhesive tape of the invention is used compared to two examples of a conventional thermal masking tape is used.
Fig. 4 shows the results after a high temperature treatment when an example of an embodiment of the double sided adhesive tape of the invention is used.

### DETAILED DESCRIPTION OF EXEMPLARY EMBODIMENTS OF THE INVENTION

Exemplary embodiments of the invention will now be described below by reference to the attached Figs. The described exemplary embodiments are intended to assist the understanding of the invention, and are not intended to limit the scope of the invention in any way.

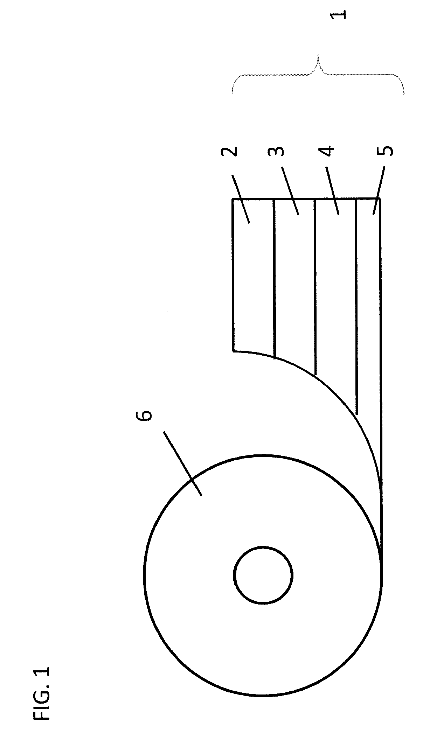

Fig. 1 shows an embodiment of the double sided adhesive tape of the invention 1. A first pressure sensitive adhesive layer 4 is coated on one surface of the carrier 3, and a second adhesive layer 2 is coated on the other surface of the carrier 3. In addition, a release liner 5 is adhered to the first pressure-sensitive adhesive layer 4. The double sided adhesive tape is wound into a roll 6.

As a material constituting the carrier 3, any appropriate material may be used as long as the effects of the invention may be obtained. For example, the carrier may be made of any flexible material that can withstand temperatures of higher than 300° C. Further, the carrier may be made of any flexible material that can withstand temperatures associated with thermal spray process, such as temperatures up to 2700° C. Examples of carrier 3 include woven and nonwoven materials. The carrier 3 may include an inorganic component, such as glass fibers, ceramic fibers, carbon fibers, and silicate fibers. The carrier 3 is preferably a porous carrier. Further yet, the carrier 3 may be a cloth carrier.

Preferably, the carrier 3 is a glass cloth. A glass cloth carrier is desirable from the standpoint that it has strong heat resistance. Examples of commercially available glass cloth include "TYPE 1131" available from Bedford Weaving Mills, Inc., and glass cloth available from JPS Composite Materials, Nittobu, and BGF Inductries, Inc.

While the dimensions of the carrier 3 may be suitably selected according to the purpose, in general, the thickness is about 4.6 mil to 5.0 mil. For example, in an exemplary embodiment, the thickness of the carrier is 4.8 mil.

As the pressure sensitive material for the pressure sensitive adhesive layers 2 and 4, any suitable pressure sensitive adhesive may be used as long as the effects of the invention may be obtained. It is preferred that the pressure-sensitive adhesive of the double sided adhesive tape be stable at high temperatures and does not degrade or melt at high temperatures. In addition, the pressure sensitive adhesive is preferred to be peeled off without adhesive residue even after heating at high temperatures. Examples of the pressure-sensitive adhesive include an acrylic adhesive, a silicone adhesive, and a rubber adhesive, such as a silicone rubber.

In an embodiment of the invention, the pressure-sensitive adhesive is a silicone adhesive. The use of a silicone adhesive is desirable from the standpoint that it has the high heat resistance (i.e., can withstand high temperatures better than the other types of adhesives). The silicone adhesive may be a curable silicone adhesive. The curable silicone adhesive may be cured using, for example, a curing agent. Examples of curing agents include peroxides, such as benzoyl peroxide, and platinum. Examples of commercially available silicone adhesives that can be used include "DOW 282", "DOW 280A", and "DOW 7657" available from Dow Chemical Company and "MOMENTIVE PSA 518" and "MOMENTIVE CR593" from General Electric Company.

While features of the pressure sensitive adhesive layers can be suitably selected according to the purpose, the coating amount of the pressure sensitive on the carrier is, in general, about 1.5 oz/yd² to 4.8 oz/yd². In addition, while the thickness of the adhesive layer can be suitably selected, in general, it is about 2 mil to 4 mil.

The production method of the pressure sensitive adhesive layers is not particularly limited. The pressure-sensitive adhesive can be directly applied to the surface of the carrier by any known application method for forming a coating. Examples of the known application method include kiss coating, gravure coating, bar coating, knife coating, or wire coating.

The pressure-sensitive adhesive layers may contain additives including fillers, lubricants, stabilizers, crosslinkers, accelerators, adhesion aides, dispersion aides, inhibitors, colorants, pigments, any combination thereof, and the like.

As the porous release liner 5, any suitable material may be used as long as the effects of the invention may be obtained. For example, the porous release liner may be made of any flexible material that can withstand temperatures of higher than 300° F. In addition, the porous release liner may be any material that has an air permeability from 5 sec/100 cc to 30000 sec/100 cc. The air permeability is more preferably 5 sec/100 cc to 3000 sec/100 cc, particularly preferably 5 sec/100 cc to 300 sec/100 cc.

Examples of materials that can be used as the porous release liner 5 include plastic films, such as a polyethylene terephthalate and polytetrafluoroethylene, or nonwoven fabrics, such as crepe paper. Examples of commercially available porous release liners that can be used include "CREPE PAPER #94389", "CREPE PAPER #60403", and "CREPE PAPER #94096" available from Fiber Mark. Preferably, heavier crepe paper provides better release properties. While the weight of the porous release liner can be suitably selected, it is preferably 2 oz/yd² to 3 oz/yd.

While features of the porous release liner can be suitably selected according to the purpose, in general, the thickness of the porous release liner is about 2 mil to 20 mil, and preferably at least about 6 mil. In the invention, the larger the thickness of the porous release liner, the pressure sensitive adhesive layer is more readily released (i.e., it is easier to release the pressure sensitive adhesive layer from the porous release liner during use).

The surface of the porous release liner 5 may have been subjected to a surface treatment using a suitable surface treatment agent. Any suitable surface treating agent may be used. Examples of suitable surface treating agents include a long alkyl chain branched polymer or fluorosilicone. Examples of commercially available fluorosilicone surface treating agents include SYL-OFF Q2-7785 and SYL-OFF Q2-7786 available from Dow Corning and examples of commercially available long alkyl chain branched polymer surface treating agents include Escoat^{®} P-20 (which is polyvinyl octadecyl carbamate). Escoat^{®} P-20 is preferred from the standpoint of providing better (i.e., easier) release of porous release liner from the pressure sensitive adhesive layer. The carbon number of long chain is preferably 12-24, more preferably 14-22. The surface treating agents may be used alone or in combination. Additionally, one or both sides of the porous release liner may be treated.

The production method of the porous release liner is not particularly limited. While the thickness of the coating of the surface treating agent can be suitably selected according to the purpose, in general, it is about 0.004 mil to 4 mil. In addition, while the amount of the coating of the surface treating agent can be suitably selected according to the purpose, in general, it is about 0.002 to 0.02 oz/yd².

In the invention, the double sided adhesive tape has a form in which a release liner is superimposed on one surface of the pressure-sensitive adhesive layer, and the tape is wound in a roll shape. When the double sided adhesive tape of the invention is wound into a roll, the back surface of the release liner on the first pressure-sensitive adhesive layer is in contact with the second pressure sensitive adhesive layer. The release liner is removed when utilizing the double sided adhesive tape.

In the invention, the use of the porous release liner allows for the direct coating of the pressure-sensitive adhesive onto both sides of the glass cloth carrier. According to the invention, the a double sided adhesive tape is manufactured by applying a first pressure sensitive adhesive coating on one surface of the carrier (i.e., first pass) to form a first pressure sensitive adhesive layer and the first pressure-sensitive adhesive layer is dried. Then, the porous release liner is superimposed on the first pressure sensitive adhesive layer and wound into the form of a roll. Then, the roll is unwound, and a second pressure sensitive adhesive coating is applied on the other surface of the carrier (i.e., a second pass) to form a second pressure sensitive adhesive layer. The second pressure-sensitive adhesive layer is dried and the double sided adhesive tape is wound into the form of a roll.

When a silicone adhesive is used, the problem of bubbles being generated in the first pressure sensitive adhesive layer during the drying of the second adhesive coating was observed.

For example, the generation of bubbles is considered to be due to the generation of bi-products of free radical reaction during the silicone adhesive curing process. To deal with such bubbling, coating a carrier on one side with a first adhesive to form a first adhesive layer, and separately forming a second adhesive layer on a release liner, then transferring the second adhesive layer formed on the release liner to the non-coated surface of the carrier may be employed. Another possible process employed may be replacing the wrinkled or bubbled release liner with a new release liner after coating the second pressure sensitive adhesive directly onto the carrier. However, such processes results in additional steps that affect cost, time and efficiency, as well as requiring increased lead time.

Therefore, in the invention, the generation of bubbles is avoided by using a porous release liner. For example, if a benzoyl peroxide cured silicone adhesive is used, it is considered that benzoic acid as a by-product may cause the bubbling. However, in the invention, due to the use of a porous release liner, the generation of bubbles is avoided. It is considered that the benzoic acid escapes via the pores of the release liner.

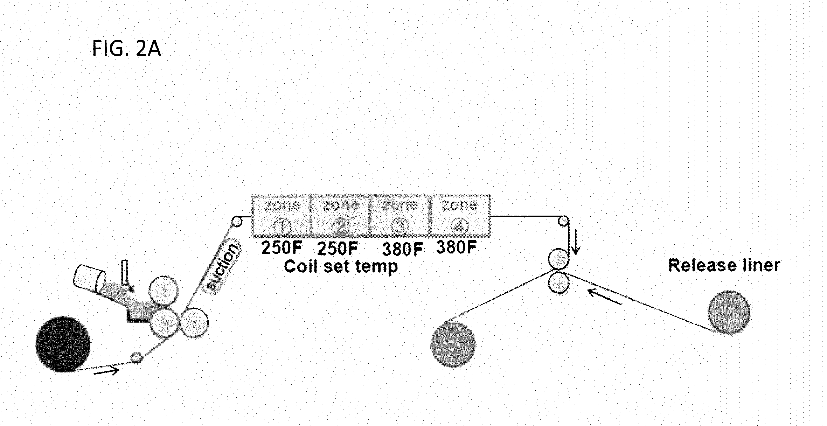

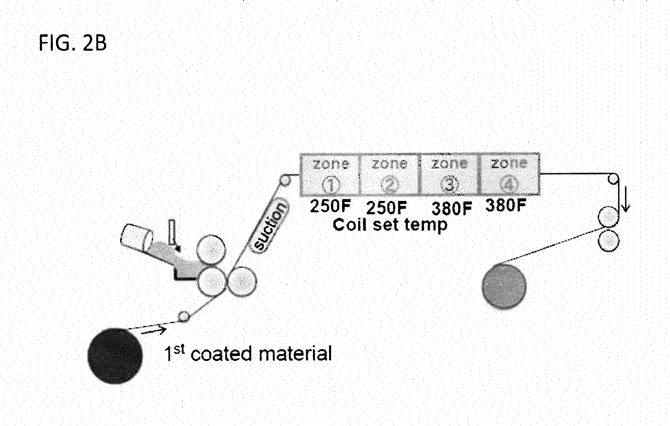

Figs. 2A and 2B illustrates an exemplary coating process of the invention. Fig. 2A shows a carrier passing through rollers where a first pressure-sensitive adhesive is applied onto one surface of the carrier. The coated first pressure-sensitive adhesive is dried to form a first pressure-sensitive adhesive layer and then a porous release liner is applied thereto, resulting in a single side coated adhesive tape. Then, a second pressure-sensitive adhesive is applied onto the non-coated surface of the carrier to form a second pressure-sensitive adhesive layer, which is dried to obtain the double sided adhesive tape of the invention.

The features of the coating process, such as tension, speed, temperature, etc., is not limited and may be appropriately selected. In general, the temperature for drying the first and second pressure sensitive adhesive layers is from 250°F to 380°F, preferably higher than 300°F to achieve curing.

The features of the double sided adhesive tape is not limited and may be appropriately selected according to the purpose. However, the double sided adhesive tape used as a thermal masking tape is exposed to extremely high temperatures, and no shrinkage in the width or length direction is desirable. In addition, in general, the thickness of the double sided adhesive tape is about 7 mil to 10 mil.

### Examples

Hereinafter, the invention will be more specifically described with reference to Examples and Comparative Examples. However, the invention is not limited to these Examples.

### Examples 1-4 and Comparative Examples 1-5

Double sided adhesive tapes were prepared by coating both sides of a glass cloth carrier with a silicone adhesive according to the process represented in Figs. 2A and 2B using the materials shown in Table 1. Each of thus obtained double sided tapes were visually inspected for wrinkles and air pockets. The results of the evaluation are also set forth in Table 1.

**Table 1**

| | **Comp. Ex. 1** | **Comp. Ex. 2** | **Ex. 1** | **Ex. 2** | **Ex. 3** | **Ex. 4** | **Comp. Ex. 3** | **Comp. Ex. 4** | **Comp. Ex. 5** |
|---|---|---|---|---|---|---|---|---|---|
| **Adhesive** | | | | | | | | | |
| Adhesive | Dow 282 | Dow 7657 | Dow 282 | Dow 282 | Dow 282 | Dow 282 | Dow 282 | Dow 282 | Dow 282 |
| C-L system | BPO | Pt | BPO | BPO | BPO | BPO | BPO | BPO | BPO |

| **Release liner** | | | | | | | | | |
|---|---|---|---|---|---|---|---|---|---|
| Release liner | PET | PET | Crepe Paper #94389 | Crepe paper #60403 | Crepe Paper #94096 | Porous PTFE | PTFE | PTFE | PI |
| Release agent on liner | F-Si | F-Si | P-20 | P-20 | P-20 | NA | NA | NA | NA |
| Thickness | 2 mil | 2 mil | 6 mil | 7 mil | 6 mil | 3.3 mil | 2 mil | 5 mil | 2 mil |
| Air Permeability (sec/100 cc) | NA | NA | 14.2 | 26335 | 7.9 | 21 | NA | NA | NA |

| **Property** | | | | | | | | | |
|---|---|---|---|---|---|---|---|---|---|
| Air bubble after oven process | Yes | No | No | No | No | No | Yes | Yes | Yes |

### Example 5 and Comparative Examples 6-7

A double sided adhesive tape (Example 5) having a silicone adhesive layer on both sides of a glass cloth carrier prepared using Crepe paper #60403 as a porous release liner was obtained. In addition, a double sided adhesive tape including a silicone rubber layer on one side of a glass cloth carrier and a silicone adhesive layer on the other side (Comparative Example 6), and a single sided adhesive tape including a glass cloth with a silicone adhesive (Comparative Example 7) were obtained. Each adhesive tape was cut and adhered to a polished copper substrate. The copper substrate with the adhesive tapes were baked at a temperature of 300° C for 15 minutes. The substrates was allowed to cool for about 10 minutes, then the adhesive tapes were peeled from the substrates.

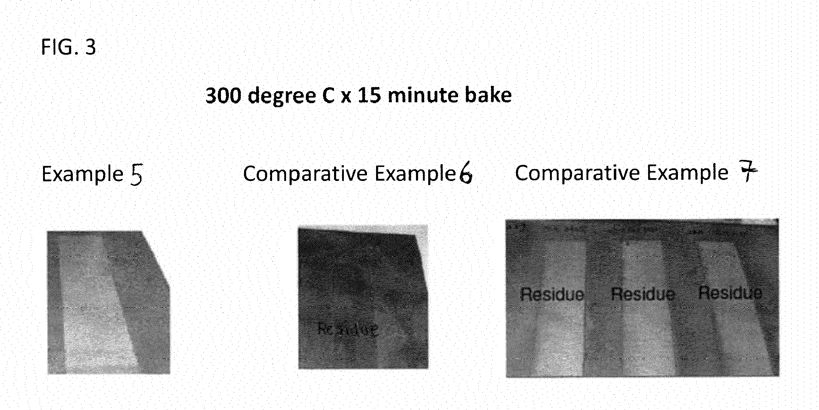

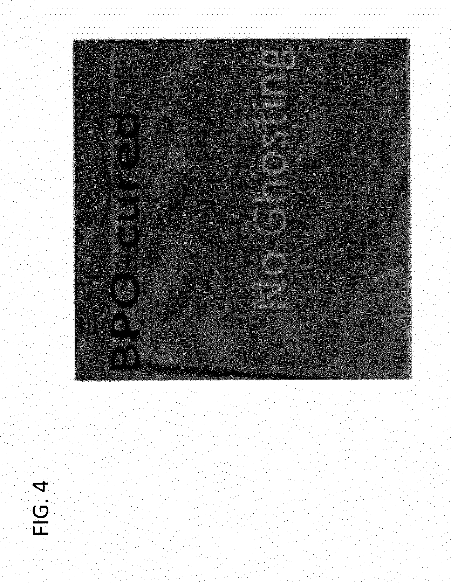

Example 5 exhibited no adhesive residue as shown in Fig. 3. On the other hand, both Comparative Examples 6 and 7 exhibited heavy adhesive residue as shown in Fig 3, respectively. In addition, Example 5 exhibited no ghosting as shown in Fig. 4. Ghosting occurs when the adhesive lacks cohesive strength resulting in a deposit or residue of the adhesive on the adherend surface when the adhesive tape is removed.

While the invention has been particularly shown and described with reference to exemplary embodiments thereof, the invention is not limited to these embodiments. It will be understood by those of ordinary skill in the art that various changes in form and details may be made therein without departing from the spirit and scope of the invention as defined by the following claims.

## Claims

1. A double-side coated tape comprising a porous carrier, a pressure sensitive adhesive layer on each side of the carrier, and a porous release liner.

2. The double-side coated tape according to claim 1, wherein the porous carrier is a glass cloth.

3. The double-side coated tape according to claim 1, wherein the release liner has an air permeability from 5-30000 sec/100cc.

4. The double-side coated tape according to claim 3, wherein the release liner has been subjected to a release treatment.

5. The double-side coated tape according to claim 4, wherein a release treating agent is a long alkyl chain polymer.

6. The double-side coated tape according to claim 1, wherein the pressure sensitive adhesive layer comprises a silicone adhesive.

7. The double-side coated tape according to claim 5, wherein the pressure sensitive adhesive layer comprises a silicone adhesive.

8. The double-side coated tape according to claim 7, wherein the silicone adhesive is a peroxide curable silicone adhesive.

9. The double-side coated tape according to claim 8, wherein the silicone adhesive is a benzoyl peroxide curable silicone adhesive.

10. The double-side coated tape according to claim 1, wherein the pressure sensitive adhesive leaves no residue property on Stainless and Copper panel after 300°C x 15 minute with 5 minute cooling.

11. A method of forming a double sided adhesive tape comprising:
providing a porous carrier having a first surface and a second surface;
applying a first pressure sensitive adhesive on the first surface of the porous carrier,
curing the first pressure sensitive adhesive to form a first pressure sensitive adhesive layer,
laminating a porous release liner on the first pressure sensitive adhesive layer,
applying a second pressure sensitive adhesive on the second surface of the porous carrier; and
curing the second pressure sensitive adhesive to form a second pressure sensitive adhesive layer.

12. The method according to claim 11, wherein the release liner has an air permeability from 5-30000 sec/100cc.

13. The method according to claim 11, wherein the pressure sensitive adhesive layer comprises a silicone adhesive.

14. The method according to claim 11, wherein the silicone adhesive is a peroxide curable silicone adhesive.
